# EUROPEAN PATENT APPLICATION

(11) **EP 1 482 660 A1**
(43) Date of publication of application: **01.12.2004**
(21) Application number: 04011969.5
(22) Date of filing: 19.05.2004
(51) Int. Cl.: H04B 7/26, H04J 3/06

(54) **Radio communication apparatus and synchronization method**

(30) Priority: 29.05.2003 JP 2003152827
(71) Applicant: MATSUSHITA ELECTRIC INDUSTRIAL CO., LTD., Kadoma-shi, Osaka 571-8501 (JP)
(72) Inventor: Hagiwara, Yasunori, Tokyo 195-0072 (JP)
(74) Representative: Grünecker, Kinkeldey, Stockmair & Schwanhäusser Anwaltssozietät

(57) **Abstract**

A radio communication apparatus that enables synchronization to be maintained reliably on a receiving side. In this apparatus, a UW detector (106) detects a UW included in a time division multiplexed mobile station received signal. A timing discrimination section (107) finds a timing difference between the UW detection timing and preset reference reception timing, and creates delay information from the found timing difference. A slot counter (109) overflows every slot and outputs an overflow signal reporting the next slot. Before a mobile station starts communication, a mobile station timing register (110) outputs at predetermined timing initial delay information obtained from a higher-level station, and after a mobile station starts communication, outputs at predetermined timing delay information input from the timing discrimination section (107).

## Description

### BACKGROUND OF THE INVENTION

### 1. Field of the Invention

The present invention relates to a radio communication apparatus and synchronization method, and more particularly to a radio communication apparatus and synchronization method whereby synchronization of a time division multiplexed received signal is acquired on the receiving side.

### 2. Description of the Related Art

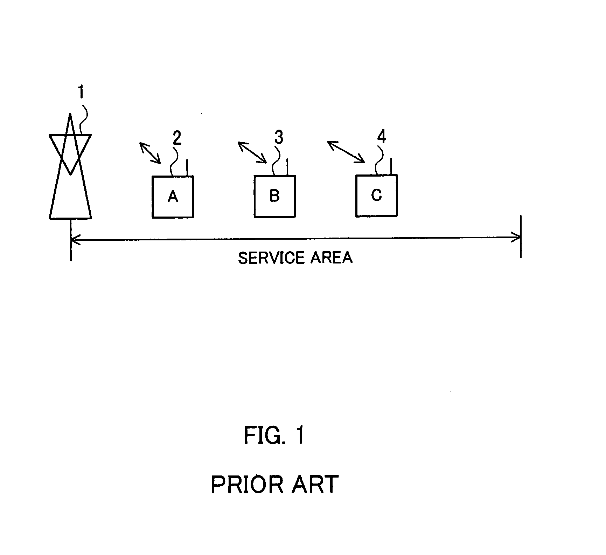

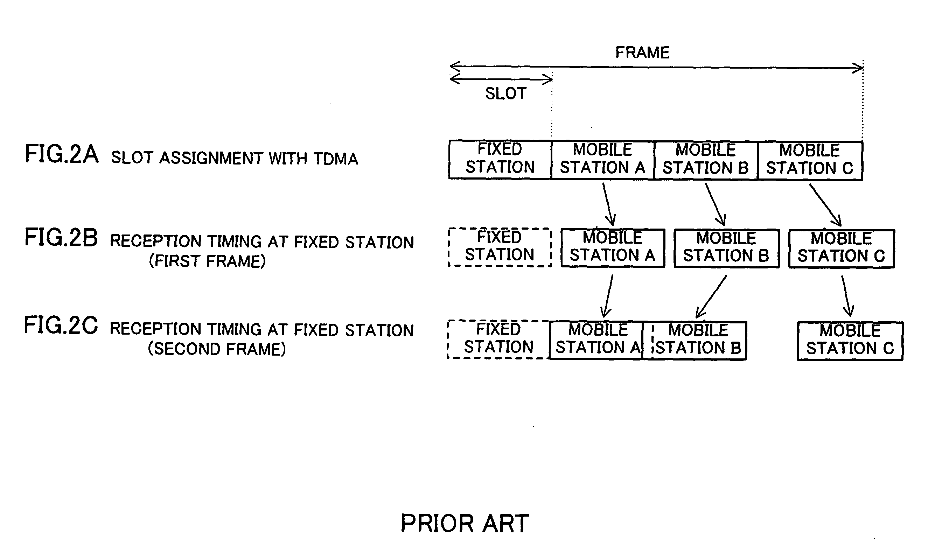

There are an increasing number of radio communication systems that perform time division multiplex communication in order to achieve efficient frequency utilization and data transfer. An overview of time division multiplex communication will be given using FIG. 1 through FIG.3. In FIG. 1, a mobile station 2, mobile station 3, and mobile station 4 move freely within a range (service area) covered by radio waves of a fixed station 1, and fixed station 1 communicates with mobile station 2, mobile station 3, and mobile station 4. Communication timings at this time are shown in FIG.2A through FIG.2C. As shown in FIG.2A, mobile station 2 (mobile station A), mobile station 3 (mobile station B), and mobile station 4 (mobile station C) have communication times assigned to individual slots, and perform communication at these assigned timings. However, as mobile stations move within the service area, fluctuations arise in their distances and radio wave paths, and reception timings at fixed station 1 vary on a frame-by-frame basis - for example, varying between the first frame and second frame as shown in FIG.2B and FIG.2C.

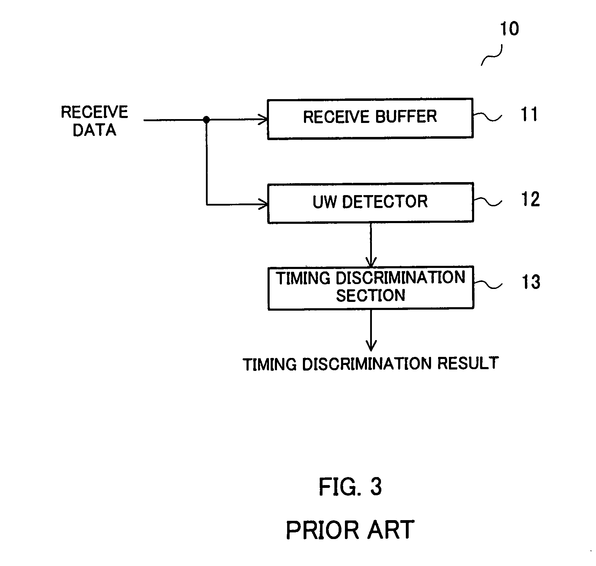

A conventional time division multiplex communication synchronization apparatus 10 has a configuration such as shown in FIG.3, for example. A receive buffer 11 stores a received signal temporarily before outputting it to a demodulation section (not shown). A unique word (hereinafter referred to as "UW") detector 12 detects the presence of a UW in a slot, and on detecting a UW in receive data, outputs UW reception timing information to a timing discrimination section 13. Timing discrimination section 13 detects the timing difference between the UW reception timing information input from UW detector 12 and reference timing set beforehand so that time division multiplexed received signals from different mobile stations do not interfere with each other. Then timing discrimination section 13 outputs the detected timing difference as the timing discrimination result. By this means, at the time of the next reception, a timing control section (not shown) performs timing control corresponding to this timing discrimination result (see, for example, Unexamined Japanese Patent Publication No.HEI 9-289499).

However, with the above-described conventional technology, the transmitting side transmits data irrespective of whether or not the receiving side can maintain synchronization, and there is thus a problem in that the receiving side cannot maintain synchronization if it receives a signal delayed by the predetermined time set in order to detect a UW or longer. In particular, when the transmitting side is a mobile station that moves while performing handover between cells, a mobile station at a cell edge is furthest from a base station, and the reception timing at the base station of a signal transmitted from the mobile station at the cell edge differs greatly from the preset base station reception timing. In a case such as this, there is a problem in that the receiving-side base station cannot detect a UW within the predetermined time, and so cannot maintain synchronization.

### SUMMARY OF THE INVENTION

It is an object of the present invention to provide a radio communication apparatus and synchronization method that enable synchronization to be maintained reliably by a receiving side.

The present invention achieves the above object by having the transmitting side adjust transmission timing using reception timing information received from the receiving side. Specifically, the gist of the present invention is that the timing difference between reception timing detected from time division multiplexed received signals of a plurality of communicating parties and reference timing set beforehand so that time division multiplexed received signals can be demodulated without interfering with each other is detected a plurality of times during communication, information on the detected timing difference is transmitted to a communicating party each time it is detected, and a communicating party that receives timing difference information establishes a predetermined timing difference from the received timing difference information and transmits a signal.

### BRIEF DESCRIPTION OF THE DRAWINGS

The above and other objects and features of the invention will appear more fully hereinafter from a consideration of the following description taken in conjunction with the accompanying drawing wherein examples are illustrated by way of example, in which:
FIG. 1 is a schematic diagram showing a conventional method of communication between a base station and mobile stations;
FIG.2A is a drawing showing an example of slot assignment in TDMA in a conventional communication method;
FIG.2B is a drawing showing an example of reception timing at a base station in a conventional communication method;
FIG.2C is a drawing showing another example of reception timing at a base station in a conventional communication method;
FIG.3 is a drawing showing the configuration of a synchronization apparatus included in a conventional base station;
FIG.4 is a block diagram showing the configuration of a base station according to Embodiment 1 of the present invention;
FIG.5 is a block diagram showing the configuration of amobile station according to Embodiment 1 of the present invention;
FIG. 6 is a flowchart showing the operation of a base station according to Embodiment 1 of the present invention;
FIG.7 is a schematic diagram showing a method of communication between base stations and mobile stations according to Embodiment 1 of the present invention;
FIG.8 is a drawing showing the frame configuration of a transmit signal according to Embodiment 1 of the present invention;
FIG.9A is a drawing showing reference reception timing at a base station according to Embodiment 1 of the present invention;
FIG. 9B is a drawing showing transmission timing of a transmit signal transmitted from a mobile station according to Embodiment 1 of the present invention;
FIG.10A is a drawing showing reference reception timing at a base station according to Embodiment 1 of the present invention;
FIG.10B is a drawing showing reception timing at a base station of data transmitted at the transmission timing in FIG.9B according to Embodiment 1 of the present invention;
FIG.11A is a drawing showing transmission timing of mobile stations shown in FIG.9A and FIG. 9B according to Embodiment 1 of the present invention;
FIG.11B is a drawing showing transmission timing of mobile stations after adjustment based on delay information according to Embodiment 1 of the present invention;
FIG.12A is a drawing showing reference reception timing at a base station according to Embodiment 1 of the present invention;
FIG.12B is a drawing showing reception timing at a base station of data transmitted at the transmission timing in FIG. 11B according to Embodiment 1 of the present invention;
FIG.13 is a block diagram showing the configuration of a base station according to Embodiment 2 of the present invention;
FIG.14 is a drawing showing a reference table according to Embodiment 2 of the present invention;
FIG.15 is a flowchart showing the operation of a base station according to Embodiment 2 of the present invention;
FIG. 16 is a block diagram showing the configuration of a base station according to Embodiment 3 of the present invention;
FIG.17 is a flowchart showing the operation of a base station according to Embodiment 3 of the present invention;
FIG.18 is a schematic diagram showing a method of communication between base stations and mobile stations according to Embodiment 3 of the present invention;
FIG.19A is a drawing showing transmission timing when delay information of mobile stations is not considered according to Embodiment 3 of the present invention;
FIG.19B is a drawing showing transmission timing when delay information of mobile stations is considered according to Embodiment 3 of the present invention;
FIG.20 is a block diagram showing the configuration of a base station according to Embodiment 4 of the present invention; and
FIG.21 is a block diagram showing the configuration of a base station according to Embodiment 5 of the present invention.

### DESCRIPTION OF THE PREFERRED EMBODIMENTS

With reference now to the accompanying drawings, embodiments of the present invention will be explained in detail below.

### (Embodiment 1)

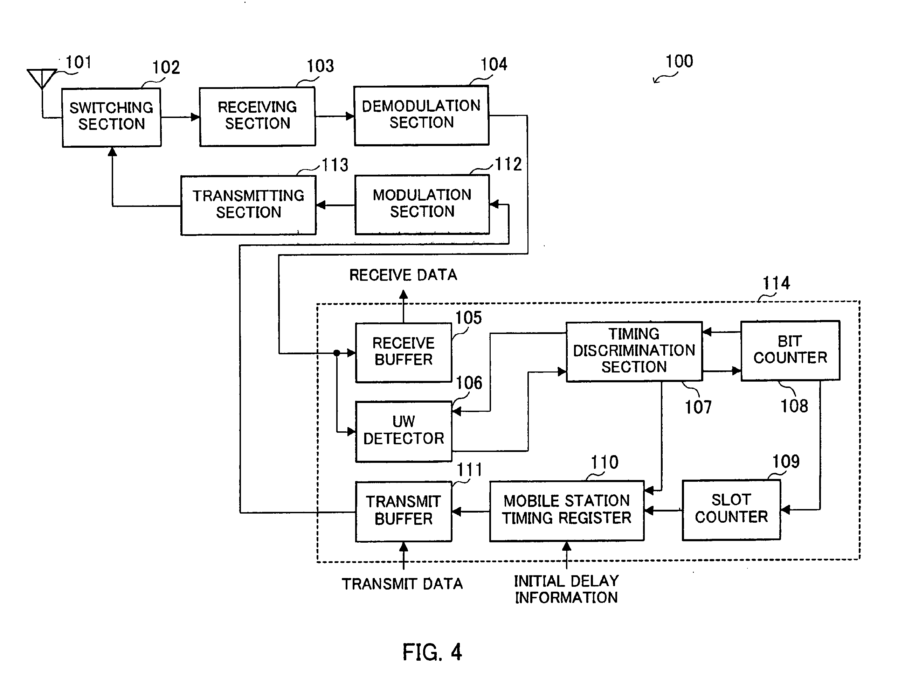

FIG.4 is a drawing showing the configuration of a base station according to Embodiment 1 of the present invention.

This base station 100 has an antenna 101, switching section 102, receiving section 103, demodulation section 104, modulation section 112, transmitting section 113, and synchronization apparatus 114. Synchronization apparatus 114 is composed of a receive buffer 105, UW detector 106, timing discrimination section 107, bit counter 108, slot counter 109, mobile station timing register 110, and transmit buffer 111.

Switching section 102 switches between processing that outputs a time division multiplexed received signal of each mobile station received by antenna 101 to receiving section 103, and processing that transmits from antenna 101 a transmit signal input from transmitting section 113.

Receiving section 103 performs down-conversion of a received signal input from switching section 102 from radio frequency to baseband frequency, and so forth, and outputs the resulting signal to demodulation section 104.

Demodulation section 104 demodulates a received signal input from receiving section 103, and outputs the resulting signal to receive buffer 105 and UW detector 106.

Receive buffer 105 temporarily stores receive data input from demodulation section 104 before outputting it to a demodulation section (not shown).

UW detector 106 detects a UW in a slot from a received signal input from demodulation section 104, and outputs information on reception timing, which is the UW detection timing, to timing discrimination section 107. To prevent erroneous synchronization, in initial UW detection UW detector 106 detects a UW within a predetermined bit range of the timing at which a UW should be detected, but in second and subsequent UW detections, UW detector 106 decides the UW detection timing taking account of timing deviation based on timing difference information input from timing discrimination section 107. A UW is a predetermined bit string unique to each mobile station, known to the base station and the respective mobile station.

When an overflow signal indicating the occurrence of overflow is input from bit counter 108, timing discrimination section 107 compares the UW detection timing information input from UW detector 106 with preset reference reception timing information input from a control section (not shown), and outputs delay information (for example, delay time information), which is information on the timing difference between the UW detection timing and reference reception timing, to mobile station timing register 110 and UW detector 106. Then, when a UW is detected, timing discrimination section 107 sets bit counter 108. Timing discrimination section 107 performs UW detection a plurality of times at predetermined timing during communication with a mobile station, and outputs delay information each time.

After being set by timing discrimination section 107, bit counter 108 is incremented by 1 each time one received signal bit is input. Bit counter 108 overflows at one slot, sends an overflow signal to slot counter 109 and timing discrimination section 107, and prepares for the next UW detection. Bit counter 108 outputs an overflow signal to slot counter 109 and timing discrimination section 107 each time it overflows, and is reset each time it overflows.

When an overflow signal is input from bit counter 108, slot counter 109 is incremented by 1 for each slot. Slot counter 109 overflows at one frame, and outputs an overflow signal to mobile station timing register 110.

When communication with a mobile station is started, mobile station timing register 110 outputs to transmit buffer 111 transmit data including initial delay information (initial transmission timing information) reported from a higher-level station apparatus at the transmission timing of the frame information slot before communication with a mobile station is started. Then, after communication with a mobile station is started, mobile station timing register 110 stores delay information input from timing discrimination section 107. Also, mobile station timing register 110 waits until a slot for transmitting delay information by inputting an overflow signal from slot counter 109, and when the timing of a slot for transmitting delay information is reached, outputs the stored delay information to transmit buffer 111. Here, initial delay information is information on the timing difference between the reception timing at which a signal transmitted from a cell edge mobile station is received and the reference reception timing, since there is generally a high probability of a mobile station being at a cell edge when communication with a mobile station is started.

Transmit buffer 111 temporarily stores transmit data including delay information input from mobile station timing register 110, and outputs transmit data including delay information to modulation section 112 at the frame information slot transmission timing.

Modulation section 112 modulates transmit data including initial delay information or delay information input from transmit buffer 111, and outputs the modulated transmit data to transmitting section 113.

Transmitting section 113 performs up-conversion of the transmit data including initial delay information or delay information input from modulation section 112 from baseband frequency to radio frequency, and so forth, and outputs the resulting signal to switching section 102.

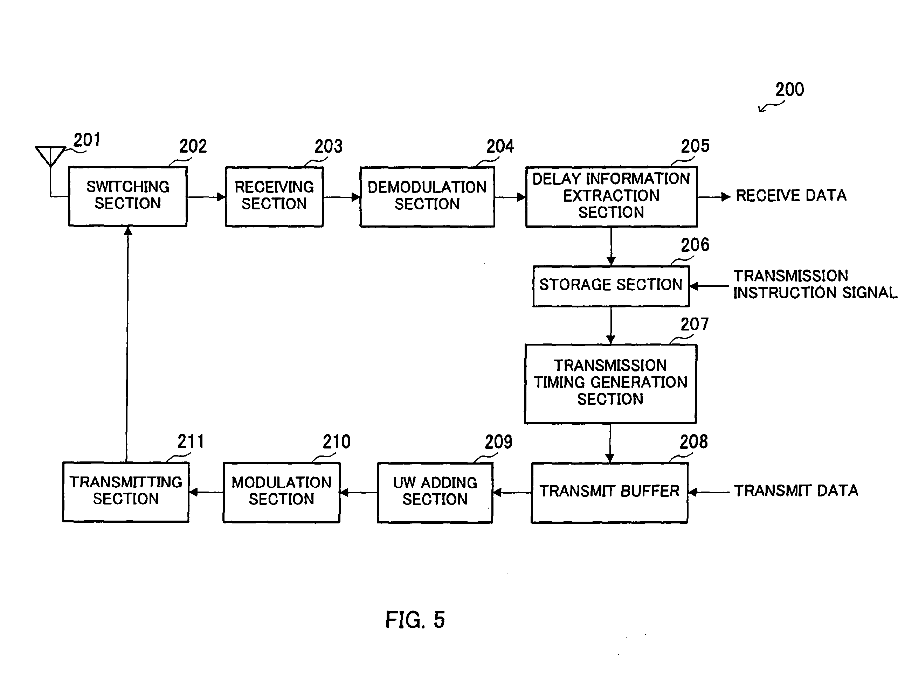

Next, a communicating-party mobile station will be described using FIG.5. FIG. 5 is a block diagram showing the configuration of a mobile station 200.

This mobile station 200 has an antenna 201, switching section 202, receiving section 203, demodulation section 204, delay information extraction section 205, storage section 206, transmission timing generation section 207, transmit buffer 208, UW adding section 209, modulation section 210, and transmitting section 211.

Switching section 202 switches between processing that outputs a received signal received by antenna 201 to receiving section 203, and processing that transmits from antenna 201 a transmit signal input from transmitting section 211.

Receiving section 203 performs down-conversion of a received signal input from switching section 202 from radio frequency to baseband frequency, and so forth, and outputs the resulting signal to demodulation section 204.

Demodulation section 204 demodulates a received signal input from receiving section 203, and outputs the resulting signal to delay information extraction section 205.

Delay information extraction section 205 extracts initial delay information or delay information included in a received signal input from demodulation section 204, outputs the extracted information to storage section 206, and also obtains receive data.

Storage section 206 stores initial delay information or delay information input from delay information extraction section 205. Then, when a transmission instruction signal is input, storage section 206 outputs the stored initial delay information or delay information to transmission timing generation section 207.

When initial delay information or delay information is input from storage section 206, transmission timing generation section 207 refers to the initial delay information or delay information, sets transmission timing so that a transmit signal is transmitted a predetermined time earlier than the reference transmission timing, and controls transmit buffer 208 so that transmission is performed at the set transmission timing.

Transmit buffer 208 establishes predetermined timing by means of transmission timing generation section 207 control, and outputs transmit data to UW adding section 209.

If the timing is that for adding a UW, UW adding section 209 adds a UW to the transmit data input from transmit buffer 208 and outputs the transmit data to modulation section 210. If the timing is not that for adding a UW, UW adding section 209 outputs the transmit data to modulation section 210 without adding a UW.

Modulation section 210 modulates the transmit data input from UW adding section 209, and outputs the modulated transmit data to transmitting section 211.

Transmitting section 211 performs up-conversion of the transmit data input from modulation section 210 from baseband frequency to radio frequency, and so forth, and outputs the resulting signal to switching section 202.

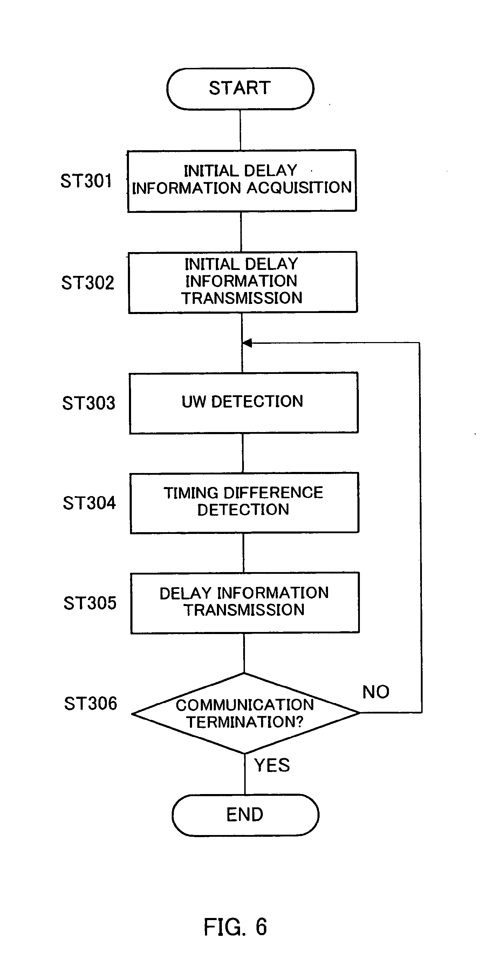

Next, the operation of base station 100 will be described using FIG.6.

First, mobile station timing register 110 obtains initial delay information reported from a higher-level station, and stores it temporarily (step ST301).

Next, mobile station timing register 110 outputs initial delay information at the transmission timing of the frame information slot before communication with a mobile station is started, and transmitting section 113 transmits initial delay information to the mobile station from antenna 101 (step ST302).

After communication with a mobile station is started, UW detector 106 detects a UW from a demodulated received signal (step ST303).

Next, timing discrimination section 107 detects the timing difference between the UW detection timing and reference reception timing (step ST304).

Transmit buffer 111 then outputs transmit data including delay information to transmitting section 113, and transmitting section 113 transmits transmit data including delay information from antenna 101 (step ST305).

Then base station 100 determines whether or not communication is to be terminated (step ST306), and if communication is not to be terminated, repeats the processing in steps ST303 through ST305. Thus, delay information is transmitted to a mobile station a plurality of times until communication is terminated, enabling the mobile station to adjust the transmission timing each time by referring to the delay information.

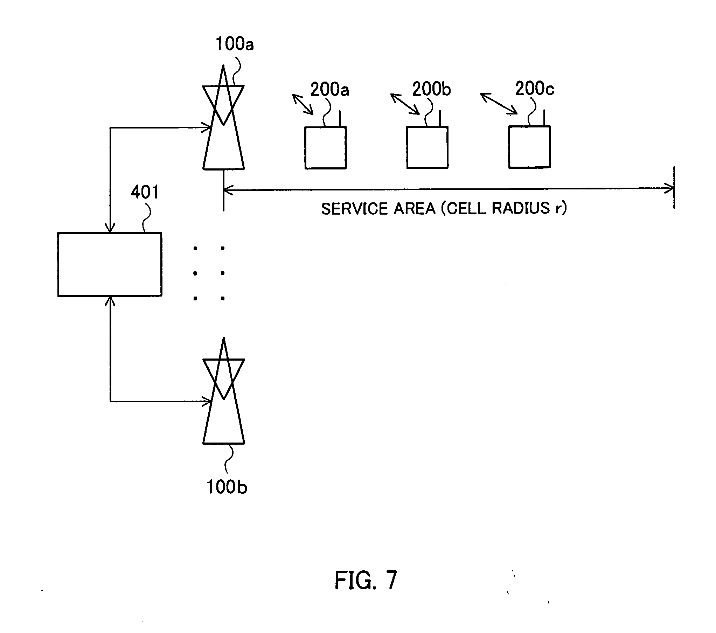

FIG.7 shows a case in which base stations 100a and 100b controlled by a control station 401, and a plurality of mobile stations 200a, 200b, and 200c, perform communication. Base station 100b performs communication with a plurality of mobile stations within a service area in the same way as base station 100a, but these are omitted in FIG.7. Base stations 100a and 100b have the configuration shown in FIG.4, andmobile stations 200a, 200b, and 200c have the configuration shown in FIG. 5.

As shown in FIG.7, base station 100a performs communication with mobile stations 200a, 200b, and 200c within a cell of cell radius r constituting the service area within which base station 100a can provide service to mobile stations 200a, 200b, and 200c. Of mobile stations 200a, 200b, and 200c, mobile station 200a is furthest from the cell edge, and mobile station 200c is nearest the cell edge. That is to say, mobile station 200a communicates with base station 100a as the mobile station nearest base station 100a, and mobile station 200c communicates with base station 100a as the mobile station furthest from base station 100a. In the case shown in FIG.7, when mobile station 200c moves away from handover source base station 100b toward handover destination base station 100a, control station 401 reports cell edge mobile station 200c initial delay information to base station 100a. Then, after receiving initial delay information, base station 100a transmits initial delay information to mobile station 200c.

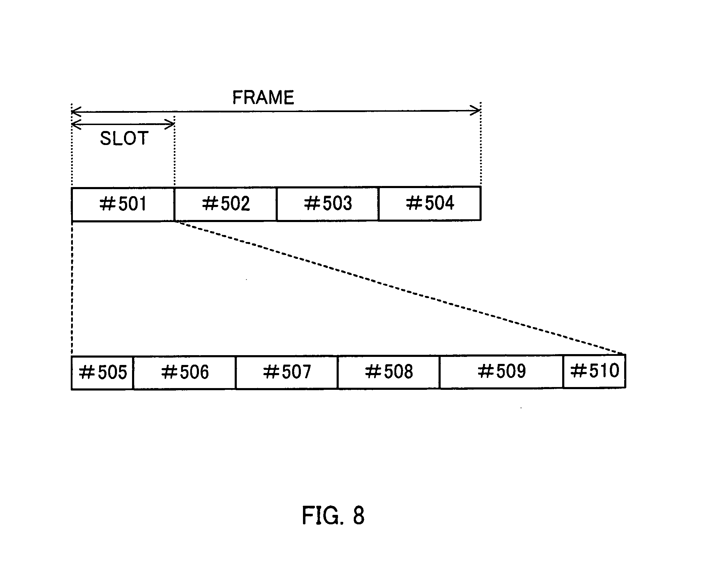

FIG.8 shows the frame configuration of one frame that includes frame information slot #15. In FIG.8, progression is from left to right over time.

As shown in FIG.8, signals from each of the mobile stations are time division multiplexed in one frame. In one frame, frame information slot #501, data #502 transmitted from mobile station 200a, data #503 transmitted from mobile station 200b, and data #504 transmitted from mobile station 200c, are assigned in that order. Also, in frame information slot #501, UW #505, mobile station 200a delay information #506, mobile station 200b delay information #507, mobile station 200c delay information #508, plus data #509 and CRC (Cyclic Redundancy Check) #510, are assigned in that order. In actual communication between base station 100a and mobile stations 200a, 200b, and 200c, FIG.8 frames are consecutive, and there are frames in which frame information slot #501 is transmitted and frames in which frame information slot #501 is not transmitted. Also, before communication with mobile stations 200a, 200b, and 200c is started, delay information #506, #507, and #508 is initial delay information.

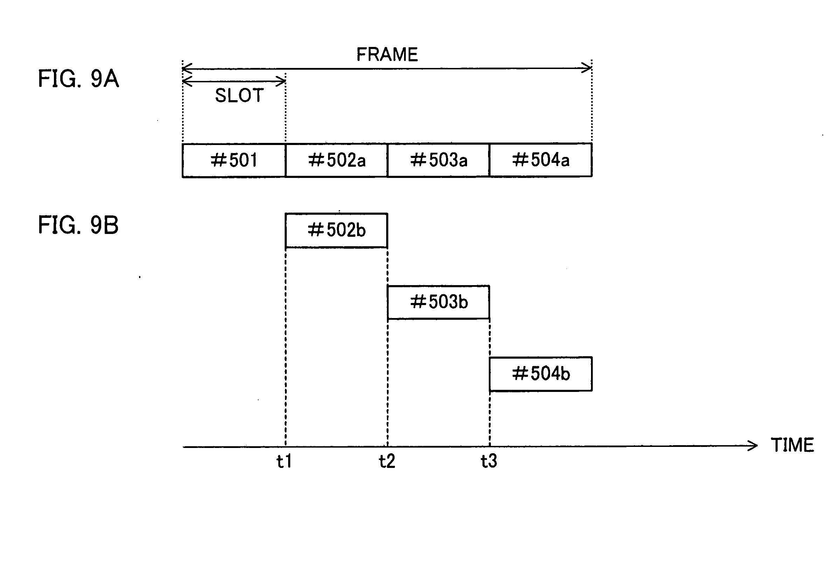

Next, differences in base station 100a reception timing between the cases where delay information is transmitted and is not transmitted from base station 100a to mobile stations 200a, 200b, and 200c will be described using FIG.9A through FIG.12B.

First, base station 100a reception timing when delay information is not transmitted from base station 100a to mobile stations 200a, 200b, and 200c will be described.

FIG.9A and FIG.9B show the transmission and reception timing of each slot, with FIG.9A showing the reference reception timing in base station 100a and FIG. 9B showing the transmission timing of mobile stations 200a, 200b, and 200c. In FIG.9A and FIG. 9B, progression is from left to right over time.

Each of mobile stations 200a, 200b, and 200c transmits transmit data at an ideal transmission time set beforehand without considering delay, etc., so that base station 100a can receive at the reference reception timing shown in FIG. 9A. That is to say, as shown in FIG. 9B, mobile station 200a starts transmit data transmission at ideal time t1, mobile station 200b starts transmit data transmission at ideal time t2 at which mobile station 200a transmit data transmission ends, and mobile station 200c starts transmit data transmission at ideal time t3 at which mobile station 200b transmit data transmission ends.

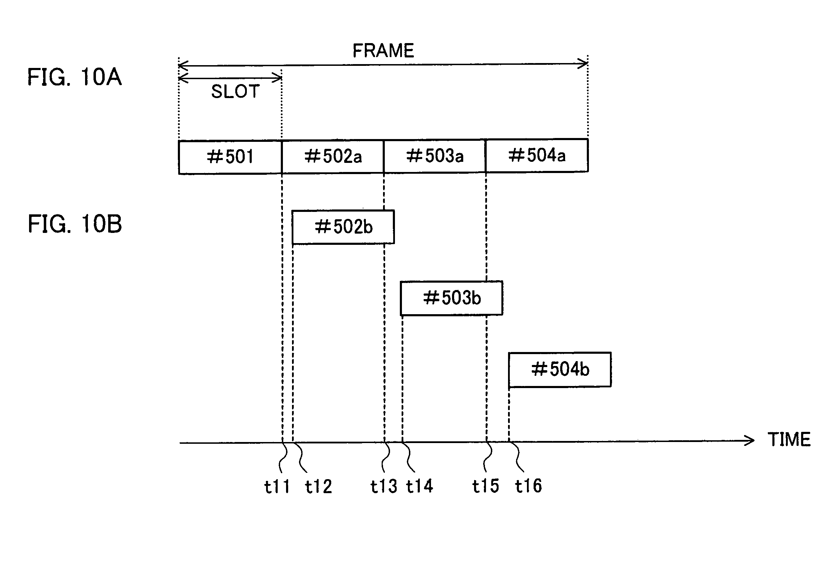

Data transmitted in this way is received by base station 100a at the reception timings shown in FIG.10A and FIG.10B. FIG.10A and FIG.10B show the reception timing of each slot in base station 100a, with FIG.10A showing the reference reception timing in base station 100a and FIG.10B showing the reception timing in base station 100a of data transmitted from each of mobile stations 200a, 200b, and 200c at the transmission timings in FIG.9B. In FIG.10A and FIG.10B, progression is from left to right over time.

As shown in FIG.10B, mobile station 200a data is received at time t12, delayed by a time of (t12-t11) from reference reception timing time t11. Also, mobile station 200b data is received at time t14, delayed by a time of (t14-t13) from reference reception timing time t13, and mobile station 200c data is received at time t16, delayed by a time of (t16-t15) from reference reception timing time t15. In this case, (t12-t11) < (t14-t13) < (t16-t15), the delay time being greater the further a mobile station is from base station 100a. At this time, if delay time (t12-t11), (t14-t13), or (t16-t15) is greater than the predetermined time in which a UW can be detected, UW detection is not possible, and therefore base station 100a cannot maintain synchronization.

Next, base station 100a reception timing when delay information is transmitted from base station 100a to mobile stations 200a, 200b, and 200c will be described.

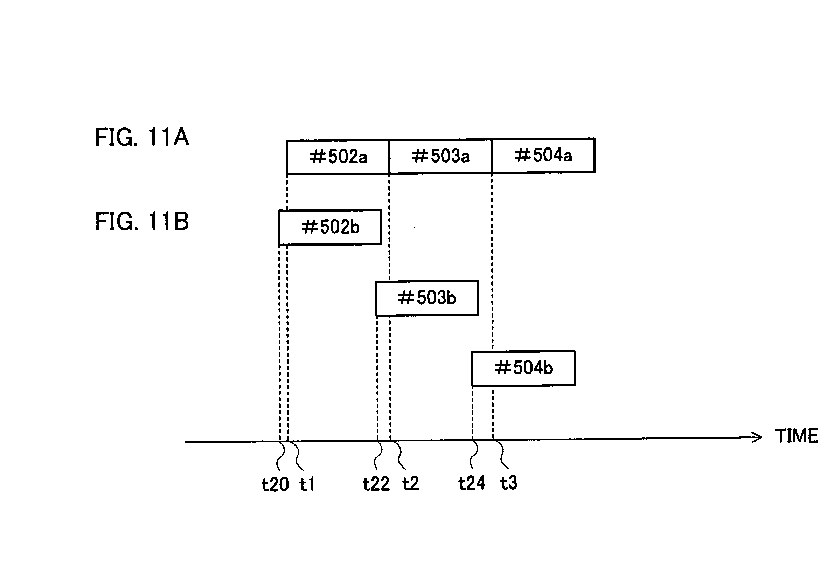

FIG.11A and FIG.11B show the transmission timing of each slot, with FIG. 11A showing the transmission timing of mobile stations 200a, 200b, and 200c in FIG.9A and FIG. 9B, and FIG. 11B showing the transmission timing of mobile stations 200a, 200b, and 200c after adjustment using delay information. In FIG.11A and FIG.11B, progression is from left to right over time.

As shown in FIG. 11B, mobile station 200a starts data transmission earlier by a time of (t1-t20) than ideal transmission time t1. Also, mobile station 200b starts data transmission earlier by a time of (t2-t22) than ideal transmission time t2, and mobile station 200c starts data transmission earlier by a time of (t3-t24) than ideal transmission time t3.

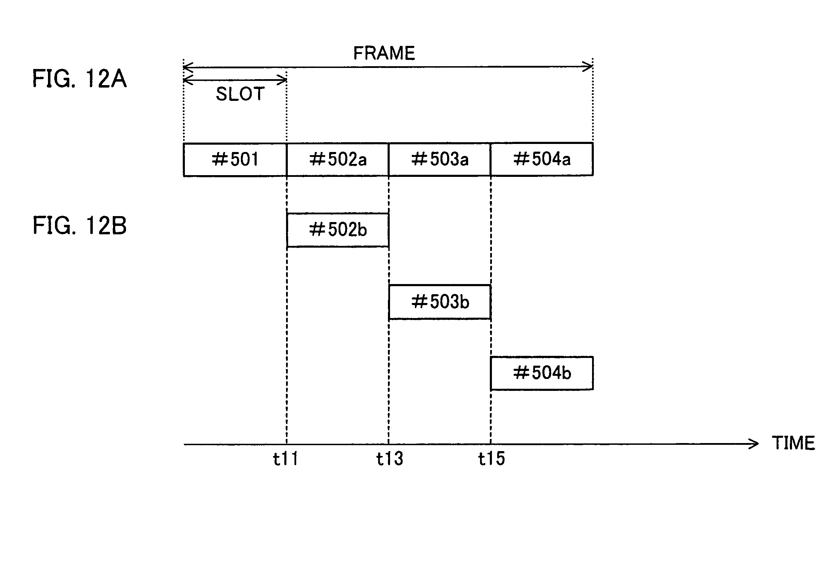

Data transmitted in this way is received by base station 100a at the reception timings shown in FIG.12A and FIG.12B. FIG.12A and FIG.12B show the reception timing of each slot in base station 100a, with FIG.12A showing the reference reception timing in base station 100a and FIG.12B showing the reception timing in base station 100a of data transmitted from each of mobile stations 200a, 200b, and 200c at the transmission timings in FIG.11B. In FIG.12A and FIG.12B, progression is from left to right over time.

As shown in FIG.12B, mobile station 200a data is received at reference reception timing time t11, mobile station 200b data is received at reference reception timing time t13, and mobile station 200c data is received at reference reception timing time t15.

Thus, according to this embodiment, a base station transmits delay information to each mobile station a plurality of times during communication, and each time delay information is received a mobile station refers to the delay information, adjusts the transmission timing, and transmits data, so that the receiving-side base station can maintain synchronization reliably irrespective of the distance from a mobile station, and can demodulate a time division multiplexed signal reliably.

Also, a base station transmits initial delay information obtained from a control station to a cell edge mobile station before the mobile station performs handover and starts communication at the cell edge, and so can maintain synchronization reliably even in the case of a received signal from a cell edge mobile station.

Moreover, when a UW is detected a second or subsequent time, the time period for UW detection can be set taking timing deviation into consideration, enabling the time period set for UW detection to be made smaller, and erroneous detection of a UW to be prevented.

### (Embodiment 2)

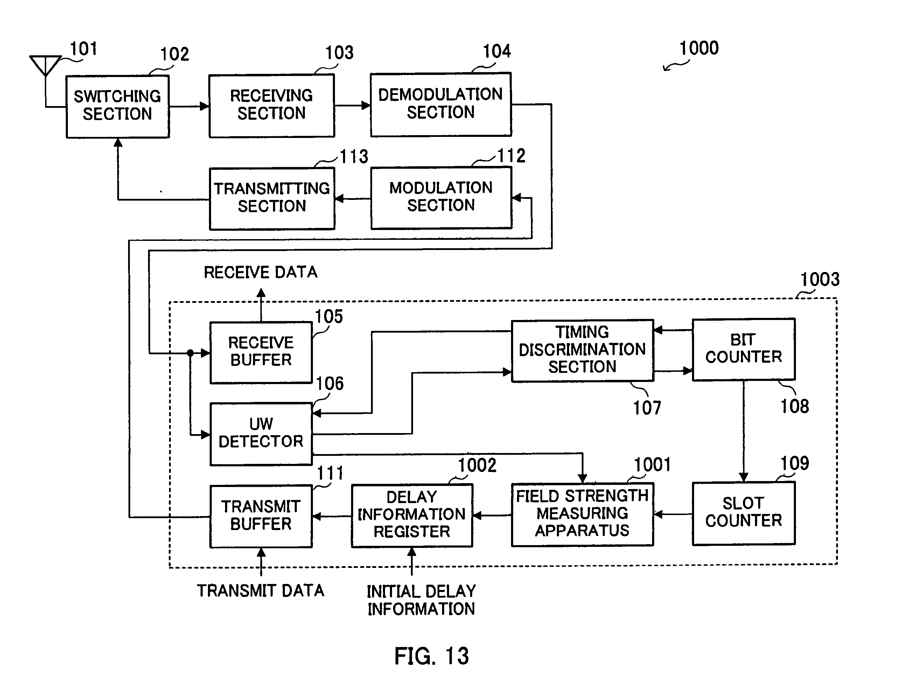

FIG.13 is a drawing showing the configuration of a base station according to Embodiment 2 of the present invention. This base station 1000 has a configuration in which a field strength measuring apparatus 1001 and delay information register 1002 have been added to base station 100 according to Embodiment 1 shown in FIG.4, and mobile station timing register 110 has been eliminated therefrom. Parts in FIG.13 identical to those in FIG.4 are assigned the same codes as in FIG.4, and descriptions thereof are omitted.

Synchronization apparatus 1003 of this base station 1000 is composed of receive buffer 105, UW detector 106, timing discrimination section 107, bit counter 108, slot counter 109, field strength measuring apparatus 1001, delay information register 1002, and transmit buffer 111.

Each time an overflow signal is input from slot counter 109, field strength measuring apparatus 1001 measures mobile station field strength from a received signal input from UW detector 106, and outputs field strength information to delay information register 1002.

Delay information register 1002 stores a reference table comprising information for timing difference setting showing the correspondence between field strength and delay information, and selects delay information by referring to the reference table using field strength information input from field strength measuring apparatus 1001. Then delay information register 1002 outputs the selected delay information to transmit buffer 111.

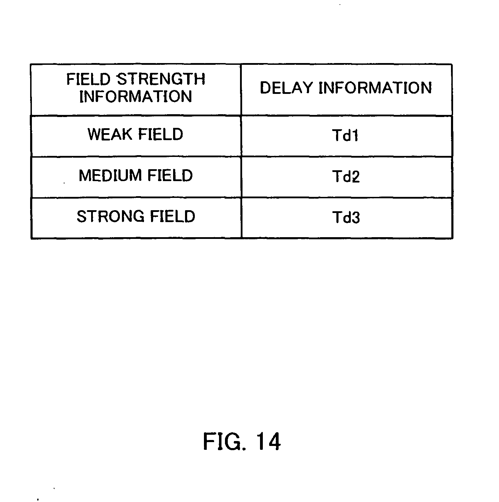

FIG.14 shows the reference table stored in delay information register 1002. Field strength information is divided into weak field, medium field, and strong field categories. In the weak field case, delay information is information that advances transmission timing by a time of Td1; in the medium field case, delay information is information that advances transmission timing by a time of Td2; and in the strong field case, delay information is information that advances transmission timing by a time of Td3. In general, a mobile station is distant in the case of a weak field classification, and a mobile station is close in the case of a strong field classification, so that Td1 > Td2 > Td3.

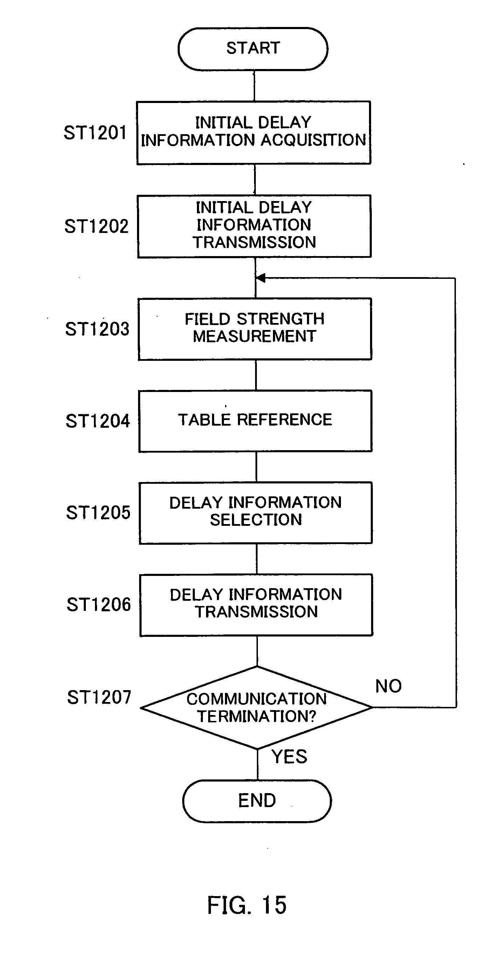

Next, the operation of base station 1000 will be described using FIG.15.

First, delay information register 1002 obtains initial delay information reported from a higher-level station, and stores it temporarily (step ST1201).

Next, delay information register 1002 outputs initial delay information at the transmission timing of the frame information slot before communication with a mobile station is started, and transmitting section 113 transmits initial delay information to the mobile station from antenna 101 (step ST1202).

After communication with a mobile station is started, field strength measuring apparatus 1001 measures field strength from the received signal (step ST1203).

Next, delay information register 1002 refers to the reference table using field strength information (step ST1204), and selects delay information (step ST1205).

Transmit buffer 111 then outputs transmit data including delay information to transmitting section 113, and transmitting section 113 transmits transmit data including delay information from antenna 101 (step ST1206).

Then base station 1000 determines whether or not communication is to be terminated (step ST1207), and if communication is not to be terminated, repeats the processing in steps ST1203 through ST1206. Thus, delay information is transmitted to a mobile station until communication is terminated, enabling the mobile station to adjust the transmission timing by referring to the delay information.

Thus, according to this embodiment, in addition to the effects of above-described Embodiment 1 being obtained, delay information can be obtained by measuring field strength and referring to a reference table using measured field strength information, enabling delay information to be created by a simple method of only referring to a reference table.

### (Embodiment 3)

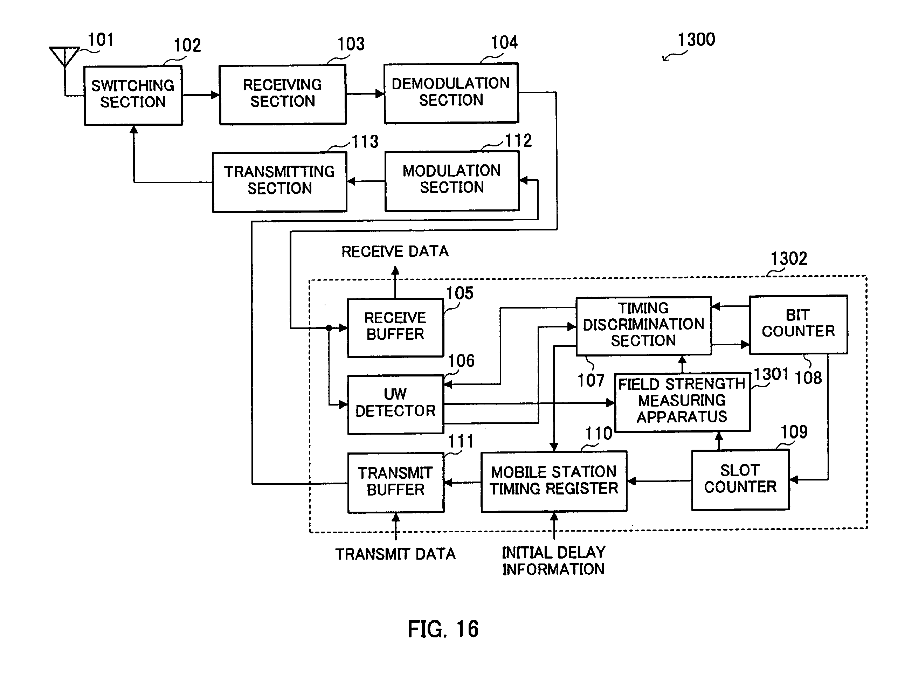

FIG.16 is a drawing showing the configuration of a base station according to Embodiment 3 of the present invention. This base station 1300 has a configuration in which a field strength measuring apparatus 1301 has been added to base station 100 according to Embodiment 1 shown in FIG.4. Parts in FIG.16 identical to those in FIG.4 are assigned the same codes as in FIG.4, and descriptions thereof are omitted.

Synchronization apparatus 1302 of this base station 1300 is composed of receive buffer 105, UW detector 106, timing discrimination section 107, bit counter 108, slot counter 109, mobile station timing register 110, transmit buffer 111, and field strength measuring apparatus 1301.

Each time an overflow signal is input from slot counter 109, field strength measuring apparatus 1301 measures mobile station field strength at a predetermined time from a received signal input from UW detector 106, and outputs field strength information, which is information on the field strength measured each time measurement is performed, to timing discrimination section 107.

Timing discrimination section 107 compares UW detection timing information input from UW detector 106 with preset reference reception timing information input from a control section (not shown), and obtains information on the timing difference between UW detection timing and reference reception timing (first timing difference). Then, using field strength information for a different time input from field strength measuring apparatus 1301, timing discrimination section 107 finds a timing difference in accordance with movement status such as whether a mobile station is approaching or moving away (second timing difference), creates delay information by correcting the information on the timing difference between UW detection timing and reference reception timing, and outputs this delay information to mobile station timing register 110. Any method can be selected for finding the timing difference in accordance with mobile station movement status, such as referring to a reference table as shown in FIG.14 of above-described Embodiment 2, or performing calculation using a predetermined calculation equation provided with correspondence between field strengths and timing differences.

From a plurality of field strength information items for each mobile station input from field strength measuring apparatus 1301, timing discrimination section 107 determines that a mobile station is approaching if field strength is increasing over time, determines that a mobile station is moving away if field strength is decreasing over time, or determines that a mobile station is stationary if field strength does not change over time, and creates delay information by subtracting or adding a predetermined time in accordance with the amount of change of field strength from/to time information as information on the timing difference between UW detection timing and reference reception timing. Details of the method of creating delay information will be described later herein.

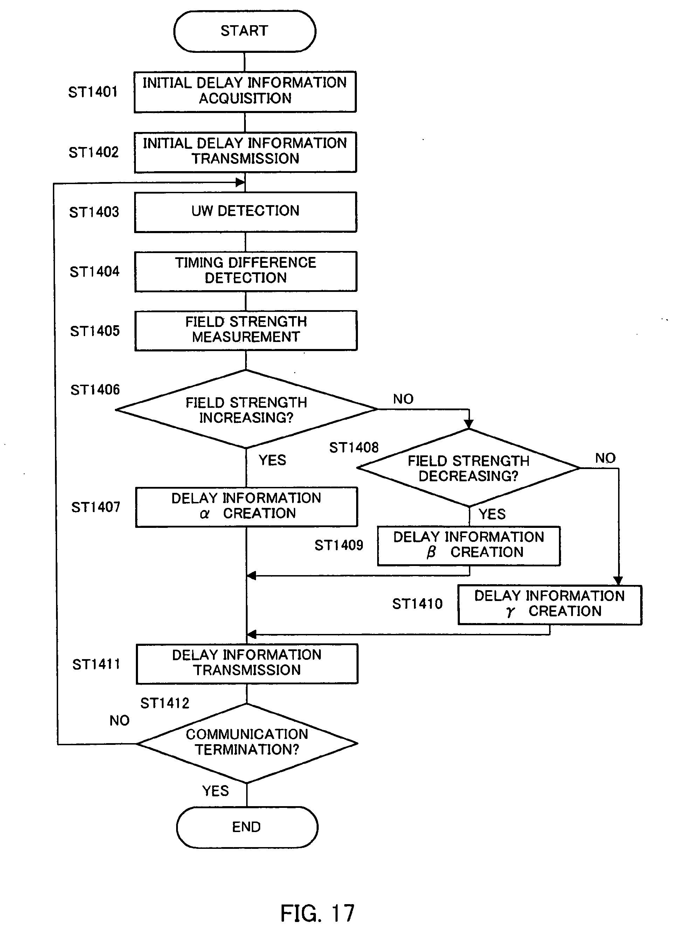

Next, the operation of base station 1300 will be described using FIG.17.

First, mobile station timing register 110 obtains initial delay information reported from a higher-level station, and stores it temporarily (step ST1401).

Next, mobile station timing register 110 outputs initial delay information at the transmission timing of the frame information slot before communication with a mobile station is started, and transmitting section 113 transmits initial delay information to the mobile station from antenna 101 (step ST1402).

After communication with a mobile station is started, UW detector 106 detects a UW from a demodulated received signal (step ST1403).

Next, timing discrimination section 107 detects the timing difference between the UW detection timing and reference reception timing (step ST1404).

Field strength measuring apparatus 1301 then measures field strength from the received signal (step ST1405).

Then timing discrimination section 107 determines whether or not field strength is increasing from a plurality of field strength measurement results (step ST1406).

If field strength is increasing, timing discrimination section 107 determines that the mobile station is approaching, and creates delay information α (step ST1407). Delay information α is the result of subtracting a predetermined time in accordance with the amount of change of field strength from time information as information on the timing difference between UW detection timing and reference reception timing.

If field strength is not increasing, timing discrimination section 107 determines whether or not field strength is decreasing (step ST1408).

If field strength is decreasing, timing discrimination section 107 determines that the mobile station is moving away, and creates delay information β (step ST1409). Delay information β is the result of adding a predetermined time in accordance with the amount of change of field strength to time information as information on the timing difference between UW detection timing and reference reception timing.

If field strength is not decreasing, timing discrimination section 107 determines that the mobile station is not moving, and creates delay information γ (step ST1410). Delay information γ is information comprising only time information as information on the timing difference between UW detection timing and reference reception timing.

Transmit buffer 111 then outputs transmit data including delay information to transmitting section 113, and transmitting section 113 transmits transmit data including delay information from antenna 101 (step ST1411).

Then base station 1300 determines whether or not communication is to be terminated (step ST1412), and if communication is not to be terminated, repeats the processing in steps ST1403 through ST1411. Thus, delay information is transmitted to a mobile station until communication is terminated, enabling the mobile station to adjust the transmission timing by referring to the delay information.

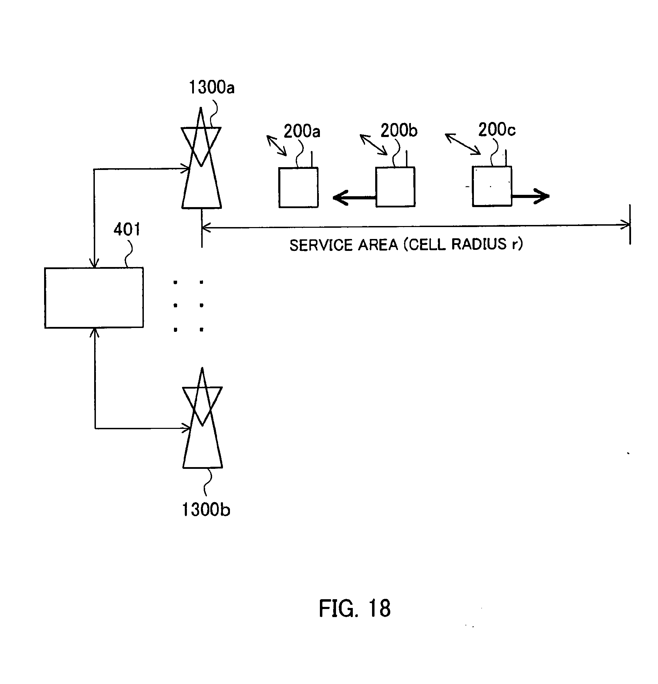

FIG.18 shows a case in which base stations 1300a and 1300b controlled by control station 401, and a plurality of mobile stations 200a, 200b, and 200c, perform communication. Base station 1300b performs communication with a plurality of mobile stations within a cell radius r in the same way as base station 1300a, but these are omitted in FIG.18. Base stations 1300a and 1300b have the configuration shown in FIG.16, and mobile stations 200a, 200b, and 200c have the configuration shown in FIG. 5. The operation of base stations 1300a and 1300b, and mobile stations 200a, 200b, and 200c, is the same as in FIG. 7, and therefore a description thereof is omitted here.

Mobile station 200a is communicating with base station 1300a while stationary. Mobile station 200b is communicating with base station 1300a while approaching base station 1300a. Mobile station 200c is communicating with base station 1300a while moving away from base station 1300a.

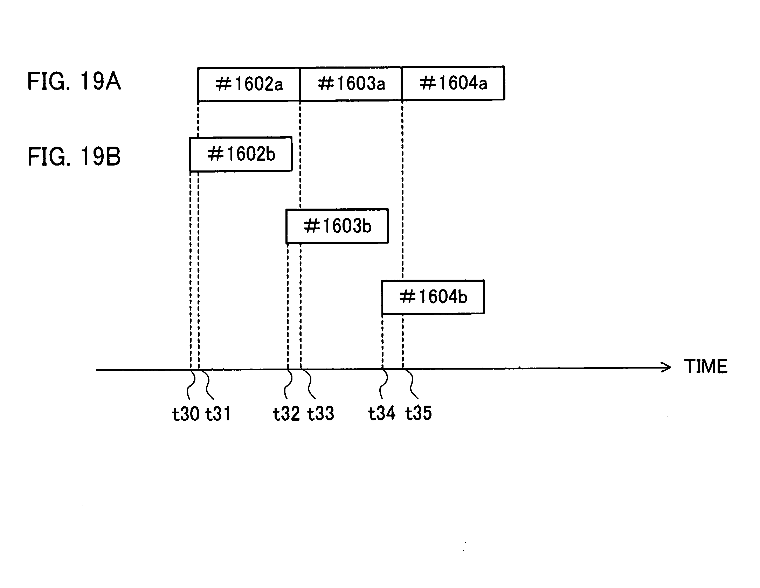

Next, the transmission timing of mobile stations 200a, 200b, and 200c will be described using FIG.19A and FIG.19B.

FIG.19A and FIG.19B show the transmission timing of mobile stations 200a, 200b, and 200c, with FIG.19A showing the transmission timing of mobile stations 200a, 200b, and 200c when delay information is not taken into consideration, and FIG.19B showing the transmission timing of mobile stations 200a, 200b, and 200c when delay information is taken into consideration. In FIG.19A and FIG.19B, progression is from left to right over time.

As mobile station 200a is stationary, timing discrimination section 107 creates delay information γ for transmission to mobile station 200a at only the reception timing of a UW detected by UW detector 106. Base station 1300a then transmits created delay information γ to mobile station 200a. Therefore, mobile station 200a refers to delay information γ and consequently starts data transmission earlier by a time of (t31-t30), the amount by which reception timing is delayed, than ideal transmission time t31.

As mobile station 200b is gradually approaching base station 1300a, timing discrimination section 107 finds delay time α1 in accordance with the amount of change of field strength from the field strength measured by field strength measuring apparatus 1301, and subtracts delay time α1 from delay time α2 found from the reception timing of a UW detected by UW detector 106, to create delay information α (α=α2-α1). Base station 1300a then transmits created delay information α to mobile station 200b. Therefore, mobile station 200b refers to delay information α and consequently starts data transmission earlier by a time of (t33-t32) than ideal transmission time t33.

As mobile station 200c is gradually moving away from base station 1300a, timing discrimination section 107 finds delay time β1 in accordance with the amount of change of field strength from the field strength measured by field strength measuring apparatus 1301, and adds delay time β1 to delay time β2 found from the reception timing of a UW detected by UW detector 106, to create delay information β (β=β1+β2). Base station 1300a then transmits created delay information β to mobile station 200c. Therefore, mobile station 200c refers to delay information β and consequently starts data transmission earlier by a time of (t35-t34) than ideal transmission time t35.

Data transmitted in this way is received by base station 1300a with mobile station 200a, 200b, and 200c received signals temporally consecutive as shown in FIG.12A. That is to say, base station 1300a is able to receive received signals of mobile stations 200a, 200b, and 200c at the preset reference reception timings.

Thus, according to this embodiment, in addition to the effects of above-described Embodiment 1 being obtained, since delay information is created from reception timing found from UW detection timing, taking into consideration the mobile station movement status found from the field strength, accurate delay information can be created even when a mobile station is performing communication while moving.

### (Embodiment 4)

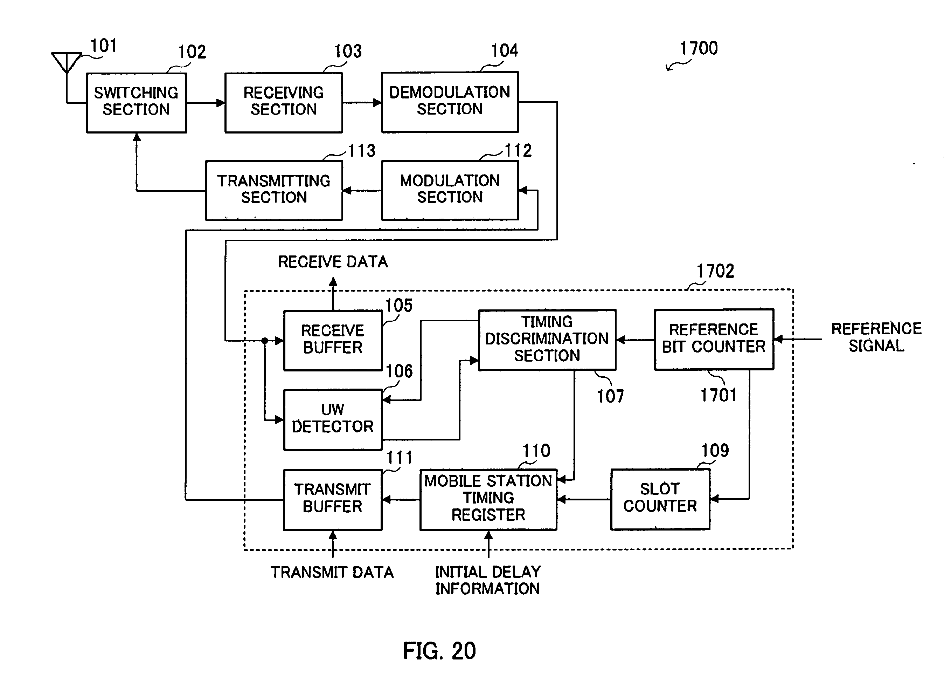

FIG.20 is a drawing showing the configuration of a base station according to Embodiment 4 of the present invention. This base station 1700 has a configuration in which a reference bit counter 1701 replaces bit counter 108 in base station 100 according to Embodiment 1 shown in FIG.4. Parts in FIG.20 identical to those in FIG.4 are assigned the same codes as in FIG.4, and descriptions thereof are omitted.

Synchronization apparatus 1702 of this base station 1700 is composed of receive buffer 105, UW detector 106, timing discrimination section 107, reference bit counter 1701, slot counter 109, mobile station timing register 110, and transmit buffer 111.

Reference bit counter 1701 acquires synchronization with an input reference signal in bit units on a regular basis, and when overflow occurs, outputs an overflow signal to timing discrimination section 107 and slot counter 109. Reference bit counter 1701 reports that the next frame is starting each time reference bit counter 1701 overflows. The reference signal here is a signal based on a standard radio wave (in Japan, a radio wave transmitted at 40 kHz or 60 kHz), a positioning radio wave from a GPS satellite (GPS), or the like.

When an overflow signal is input from reference bit counter 1701, timing discrimination section 107 compares UW detection timing information input from UW detector 106 with preset reference reception timing information input from a control section (not shown), and outputs delay information, which is information on the timing difference between the UW detection timing and reference reception timing, to mobile station timing register 110 and UW detector 106. The operation of base station 1700 is the same as in FIG. 6, and therefore a description thereof is omitted here.

Thus, according to this embodiment, in addition to the effects of above-described Embodiment 1 being obtained, since delay information that is transmitted is created based on a reference signal, it is not necessary for both a base station and mobile station to have a high-precision oscillator, enabling a simple configuration to be used for a base station and mobile station, and so allowing simplicity of construction and construction at low cost.

### (Embodiment 5)

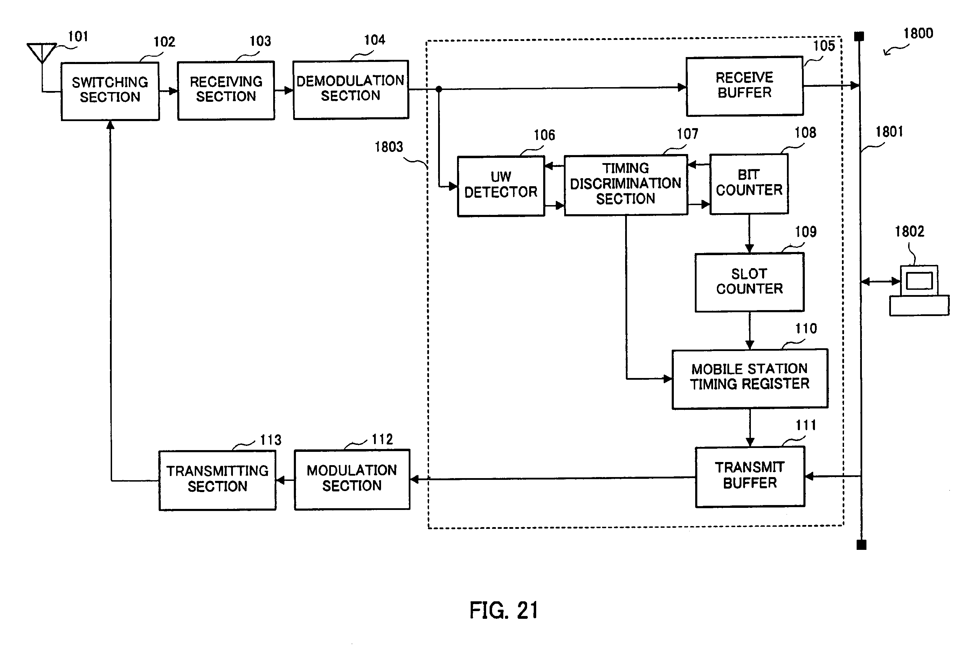

FIG.21 is a drawing showing the configuration of a base station according to Embodiment 5 of the present invention. This base station 1800 has a configuration in which a bidirectional bus 1801 and control computer 1802 have been added to base station 100 according to Embodiment 1 shown in FIG.4. Parts in FIG.21 identical to those in FIG.4 are assigned the same codes as in FIG.4, and descriptions thereof are omitted.

Synchronization apparatus 1803 of this base station 1300 is composed of receive buffer 105, UW detector 106, timing discrimination section 107, bit counter 108, slot counter 109, mobile station timing register 110, and transmit buffer 111.

Bidirectional bus 1801 connects receive buffer 105, transmit buffer 111, and control computer 1802, and transmits a received signal from receive buffer 105 to control computer 1802 and also transmits a transmit signal from control computer 1802 to transmit buffer 111.

Control computer 1802 processes a received signal input from receive buffer 105 via bidirectional bus 1801, and also outputs a transmit signal for transmission to a mobile station, etc., to transmit buffer 111 via bidirectional bus 1801. Control computer 1802 also transmits initial delay information before communication with a mobile station is started to transmit buffer 111 via bidirectional bus 1801. The operation of base station 1800 is the same as in FIG.6, and therefore a description thereof is omitted here.

Thus, according to this embodiment, in addition to the effects of above-described Embodiment 1 being obtained, since an apparatus such as a control computer connected to a bidirectional bus can perform signal transmission and reception without awareness of timing adjustment with respect to mobile stations, it is possible to ease the addition of an apparatus such as a control computer connected to a bidirectional bus, and also to reduce the power consumption of an apparatus such as a control computer connected to a bidirectional bus.

In above Embodiments 1 through 5, a case has been described in which communication is performed between a base station and mobile stations, but this is not a limitation, and the present invention can be applied as long as communication is performed between a fixed station and communication terminal apparatuses.

As described above, according to the present invention, the transmitting side performs transmission while adjusting timing so that the amount of synchronization deviation does not become large, based on information received in predetermined cycles from the receiving side during communication, enabling synchronization to be maintained reliably by the receiving side.

That is to say, a radio communication apparatus of the present invention has a configuration comprising a reception timing detection section that detects the reception timing of time division multiplexed received signals from a plurality of communicating parties, a timing difference detection section that detects a timing difference between reception timing detected by the reception timing detection section and preset reference reception timing, and a transmitting section that, each time a timing difference is detected by the timing difference detection section, transmits information on the detected timing difference to the corresponding communicating party.

According to this configuration, by notifying a communicating party of information on timing differences detected a plurality of times at the time of each detection, the communicating party can set transmission timing with reference to timing difference information, major deviation of reception timing on the receiving side of a signal transmitted from the communicating party can be prevented, and synchronization can be maintained reliably by the receiving side.

A radio communication apparatus of the present invention has a configuration wherein, in the above-described configuration, there is further provided a known signal detection section that detects a known signal included in a received signal, and the aforementioned timing difference detection section detects a difference between detection timing of the known signal detected by the known signal detection section and the aforementioned reference reception timing as the aforementioned timing difference.

According to this configuration, in addition to obtaining the above-described effects, reception timing can be detected using a known signal such as a unique word specific to each communicating party, enabling reception timing to be detected accurately.

A radio communication apparatus of the present invention has a configuration wherein, in an above-described configuration, there are further provided a field strength measuring section that measures the field strength of a received signal and a storage section that stores timing difference setting information in which correspondence between received signal field strength and the aforementioned timing difference is indicated, and the aforementioned timing difference detection section detects the aforementioned timing difference by referring to the aforementioned timing difference setting information stored in the storage section using field strength measured by the field strength measuring section.

According to this configuration, in addition to obtaining the above-described effects, a timing difference can be found simply by selecting a timing difference with reference to timing difference setting information stored beforehand, enabling timing difference information to be obtained by means of a simple method.

A radio communication apparatus of the present invention has a configuration wherein, in an above-described configuration, there are further provided a known signal detection section that detects a known signal included in a received signal and a field strength measuring section that measures the field strength of a received signal, and the aforementioned timing difference detection section finds a first timing difference between the detection timing of a known signal detected by the known signal detection section and the aforementioned reference reception timing, and also finds a second timing difference in accordance with the movement status of the corresponding communicating party using field strength measured by the field strength measuring section, and detects the aforementioned timing difference by correcting the first timing difference using the second timing difference.

According to this configuration, in addition to obtaining the above-described effects, it is possible to determine whether a communicating party is approaching or moving away based on received signal field strength, enabling field strength information to be taken into consideration when a timing difference is detected, and so enabling an accurate timing difference to be found even when a communicating party is moving at high speed.

A radio communication apparatus of the present invention has a configuration wherein, in an above-described configuration, the aforementioned transmitting section obtains from a higher-level station information on initial transmission timing of a communicating party when that communicating party first transmits, and transmits the obtained initial transmission timing information to the communicating party before the communicating party starts transmission.

According to this configuration, in addition to obtaining the above-described effects, when communication is performed between a base station and mobile station, for example, the base station can report timing difference information to a cell edge mobile station that will start communication with a handover destination base station before communication is started, thereby enabling a base station to maintain synchronization reliably even at the start of communication.

A radio communication apparatus of the present invention has a configuration wherein, in an above-described configuration, the aforementioned reference reception timing is synchronized with a standard radio wave or positioning radio wave.

According to this configuration, in addition to obtaining the above-described effects, it is possible for accurate timing difference information synchronized with a standard radio wave or positioning radio wave to be reported to a communicating party, enabling synchronization to be acquired extremely accurately on the receiving side.

A base station apparatus of the present invention has a configuration comprising any one of the above-described radio communication apparatuses.

According to this configuration, by having a base station notify a mobile station of information on timing differences detected a plurality of times at the time of each detection, a mobile station can set transmission timing with reference to timing difference information, so that major deviation of reception timing at the base station apparatus of a signal transmitted from a mobile station can be prevented, and synchronization can be maintained reliably by the base station apparatus.

A radio communication apparatus of the present invention has any one of the above-described radio communication apparatuses as a communicating party that performs time division multiplex communication, and has a configuration comprising a receiving section that receives aforementioned timing difference information, a setting section that, based on aforementioned timing difference information received by the receiving section, sets transmission timing so that a transmit signal is transmitted earlier by the amount of the aforementioned timing difference than reference transmission timing, and a transmitting section that transmits a transmit signal in accordance with transmission timing set by the setting section.

According to this configuration, it is possible to ascertain from timing difference information received from a transmitting-side radio communication apparatus the reception timing of that radio communication apparatus, enabling timing when transmitting to be adjusted, and the reception timing delay time of the transmitting-side radio communication apparatus to be reduced.

The present invention is not limited to the above-described embodiments, and various variations and modifications may be possible without departing from the scope of the present invention.

This application is based on Japanese Patent Application No.2003-152827 filed on May 29, 2003, entire content of which is expressly incorporated by reference herein.

## Claims

1. A radio communication apparatus comprising:
a reception timing detection section (106) that detects reception timing of time division multiplexed received signals from a plurality of communicating parties;
a timing difference detection section (107) that detects a timing difference between the reception timing detected by said reception timing detection section (106) and preset reference reception timing; and
a transmitting section (110, 111, 112, 113) that, each time the timing difference is detected by said timing difference detection section (107), transmits information on the detected timing difference to a corresponding communicating party.

2. The radio communication apparatus according to claim 1, further comprising a known signal detection section (106) that detects a known signal included in the received signal;
wherein said timing difference detection section (107) detects a difference between detection timing of the known signal detected by said known signal detection section (106) and the reference reception timing as the timing difference.

3. The radio communication apparatus according to claim 1, further comprising:
a field strength measuring section (1001) that measures field strength of the received signal; and
a storage section (1002) that stores timing difference setting information in which correspondence between received signal field strength and the timing difference is indicated;
wherein said timing difference detection section (1002) detects the timing difference by referring to the timing difference setting information stored in said storage section (1002) using the field strength measured by said field strength measuring section (1001).

4. The radio communication apparatus according to claim 1, further comprising:
a known signal detection section (106) that detects a known signal included in the received signal; and
a field strength measuring section (1301) that measures field strength of the received signal;
wherein said timing difference detection section (107) finds a first timing difference between detection timing of the known signal detected by said known signal detection section (106) and the reference reception timing, and also finds a second timing difference in accordance with movement status of a corresponding communicating party using the field strength measured by said field strength measuring section (1301), and detects the timing difference by correcting the first timing difference using the second timing difference.

5. The radio communication apparatus according to any one of claim 1 through claim 4, wherein said transmitting section (110) obtains from a higher-level station information on initial transmission timing of a communicating party when the communicating party first transmits, and transmits the obtained initial transmission timing information to the communicating party before the communicating party starts transmission.

6. The radio communication apparatus according to any one of claim 1 through claim 5, wherein said reference reception timing is synchronized with a standard radio wave or positioning radio wave.

7. A radio communication apparatus that has the radio communication apparatus according to any one of claim 1 through claim 6 as a communicating party that performs time division multiplex communication, said radio communication apparatus comprising:
a receiving section (203, 204, 205) that receives information on the timing difference;
a setting section (207) that, based on the timing difference information received by said receiving section (203, 204, 205), sets transmission timing so that a transmit signal is transmitted earlier by an amount of the timing difference than reference transmission timing; and
a transmitting section (208, 209, 210, 211) that transmits the transmit signal in accordance with the transmission timing set by said setting section (207).

8. A base station apparatus comprising the radio communication apparatus according to any one of claim 1 through claim 6.

9. A synchronization method comprising:
a reception timing detection step of having a transmitting side detect reception timing of time division multiplexed received signals from a plurality of communicating parties;
a timing difference detection step of having the transmitting side detect a timing difference between the reception timing detected in said reception timing detection step and preset reference reception timing;
a transmitting step of having the transmitting side, each time the timing difference is detected in said timing difference detection step, transmit information on the detected timing difference to a corresponding communicating party;
a receiving step of having a receiving side receive the timing difference information transmitted from the transmitting side;
a setting step of having the receiving side, based on the timing difference information received in said receiving step, set transmission timing so that a transmit signal is transmitted earlier by an amount of the timing difference than reference transmission timing; and
another transmitting step of having the receiving side transmit the transmit signal in accordance with transmission timing set in said setting step.
